# EUROPEAN PATENT APPLICATION

(11) **EP 2 140 750 A2**
(43) Date of publication of application: **06.01.2010**
(21) Application number: 09008810.5
(22) Date of filing: 06.07.2009
(51) Int. Cl.: A01C 23/04

(54) **A coupling for connecting a mobile tank with a stationary tank**

(30) Priority: 04.07.2008 NL 1035662
(71) Applicant: AGRO-INVENT B.V., 8308 RT Nagele (NL)
(72) Inventor: Capelle, Adriaan Cornelis, 8308 RT Nagele (NL)
(74) Representative: Bartelds, Erik

(57) **Abstract**

The invention relates to a coupling (110) for connecting a fill line (103) of a mobile tank (102) with a supply line of a stationary storage tank. This coupling comprises a footplate (117) carrying a coupling mouth (136) and adapted for connection with the storage tank through the supply line. The coupling further comprises valve means (131) for selectively establishing and interrupting fluid communication between the footplate and the storage tank. The coupling has a modular structure.

In particular, the footplate and the valve means may be formed as separate modules that may be interconnected by an intermediate conduit.

## Description

The present invention relates to a coupling for connecting a fill line of a mobile tank with a supply line of a stationary storage tank, comprising a footplate carrying a coupling mouth and adapted for connection with the storage tank through the supply line and valve means for selectively establishing and interrupting fluid communication between the footplate and the storage tank. Such a coupling is disclosed in the applicant's own prior art document EP 1 050 204.

The coupling according to EP 1 050 204 is used, for example, for coupling a mobile slurry tank to a slurry container. After first being collected from a stall in a slurry container, slurry is often spread over the land or injected. Especially if relatively lightweight vehicles have to move over the land, the number of trips that has to be made over the land will be appreciable.

In the prior art it was customary to provide the slurry tank with a hose and to place this hose in the slurry container. Vacuum was then applied to the tank and in this way slurry was pumped from the container into the tank. On completion of the action, the hose was removed from the container again by the operator and thrown over the tank.

This method had a number of disadvantages. Firstly, the weight of the hose filled with slurry which had to be moved by the operator was substantial and in any event was much higher than would be acceptable under current legislation. Secondly, when the hose was moved after removal from the container, manure would spill onto the farmyard. Since up to 40 or 50 trips might be made in a day, substantial pool of slurry would be formed, which was undesirable and had a polluting effect. And finally, a large number of movements on the part of the operator were required for coupling.

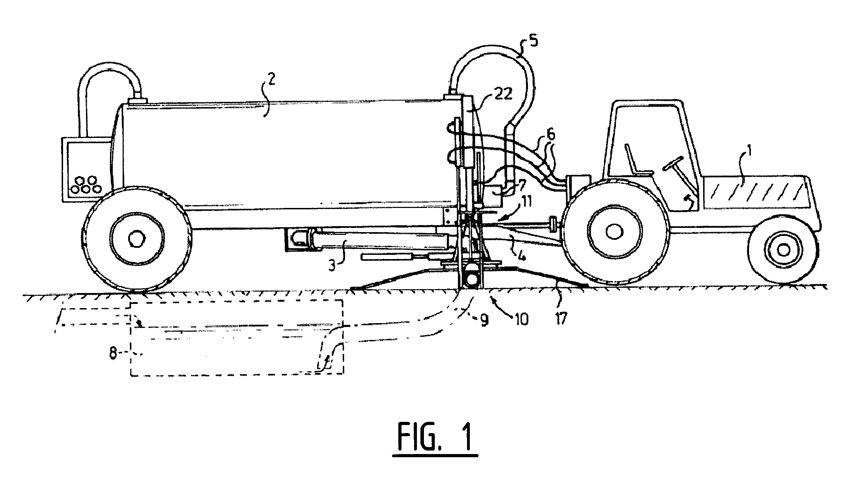

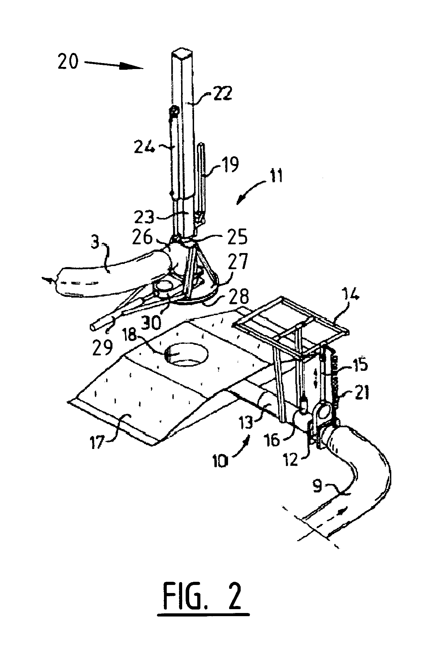

The applicant's earlier coupling design as disclosed in EP 1 050 204 was aimed at providing a construction which would be more compact than the conventional couplings and with which negligible quantities of fluid to be pumped would remain behind after uncoupling the coupling assembly. This design is shown in Figures 1 and 2.

In Fig. 1 a mobile slurry tank 2 is shown to be coupled to a tractor 1 through a frame 4. A conduit 3 connects to tank 2. This conduit 3 serves to take up slurry from an underground stationary storage container 8. Transport of slurry is achieved by means of a vacuum supplied by conduit 5 which is connected to a vacuum pump 7. The vacuum pump 7 reduces the pressure in the tank 2, thus drawing in slurry. Hydraulic and control conduits 6 run between the tractor 1 and mobile slurry tank 2.

The slurry storage container 8 may be a slurry pit or a high standing slurry container or any other store. A conduit 9 is introduced into the slurry container 8, as can be seen from Fig. 1. The end of conduit 9 is provided with a first coupling part 10, whilst the end of conduit 3 is provided with a second coupling part 11.

Conduit 9 is connected via sliding valve 12 to a pipe 13. The latter opens into an outlet opening 18 made in a footplate 17. Sliding valve 12 can be operated by means of a rod 15 which is connected to one end of a tilting yoke 14. A spring 21 is fitted to drive the tilting yoke 14 into the position for closing valve 12. The tilting yoke 14 is also connected to venting valve 16. An opposite end of the tilting yoke 14 can be engaged by an operating lever 19 that is mounted on a telescoping leg 20, which in turn is mounted on frame 4.

Telescoping leg 20 includes a fixed part 22 mounted on frame 4 and a telescoping part 23. Telescoping movement of the parts 22, 23 takes place by means of a jack 24, which can be controlled from the tractor 1. Movement of the operating lever 19 may also be controlled from tractor 1.

The lower end of the telescoping leg part 23 is connected via a ball joint 25 to second coupling part 11. This coupling part 11 includes an outflow stub 26 which is connected to conduit 3 and a coupling flange 27 which can be mounted on outlet opening 18 of the first coupling part 10. A rubber ring 28 fitted around the coupling flange 27 provides a seal. A sliding valve 30 is arranged between the outflow stub 26 and the coupling flange 27 and is operated by a jack 29 under control from the driver on the tractor 1.

Although the coupling assembly as disclosed in EP 1 050 204 is an improvement over the conventional prior art couplings, it still has some drawbacks. In particular, the coupling assembly is relatively bulky and heavy, making it difficult to handle. Moreover, the coupling assembly of EP 1 050 204 is not suitable for use in situations where the mobile tank 2 cannot be brought relatively close to the stationary tank 8.

The invention now has for its object to provide a coupling of the type described above, in which these drawbacks are at least partially obviated. In accordance with the invention, this is accomplished in a coupling as defined in the preamble, in that the coupling has a modular structure. By providing a modular coupling the various modules of the coupling can be relatively small and lightweight, so that the coupling as a whole is relatively easy to handle.

In a preferred embodiment of the coupling the footplate and the valve means are formed as separate parts that may be interconnected by an intermediate conduit. This intermediate conduit allows the footplate and the valve means to be spaced apart, thus enabling the use of the coupling in situations where the stationary tank is not easily accessible. In order to provide maximum flexibility in the mutual position of the footplate and the valve means the conduit is preferably a flexible hose.

When the footplate has an upper surface in which the coupling mouth is formed and a side face carrying a connector for the intermediate conduit, the fill line of the mobile tank may easily be positioned over the coupling and connected thereto.

A structurally simple and robust coupling is obtained when the valve means comprise a body defining an internal conduit, a main valve member movably arranged in the body for selectively closing off or opening the internal conduit, and a connector for the intermediate conduit.

In order to allow the coupling to be operated without manual intervention by the operator, the valve means preferably comprise an actuator operatively connected to the valve member and control means controllingly connected to the actuator.

When the control means are adapted for remote control, the operator does not have to leave his position on the tractor to operate the coupling and establish the fluid connection between the fill line and the supply line.

The valve means preferably comprise a vent line extending through the body from the internal conduit to the atmosphere, as well as a controllable vent valve, in order to allow the lines to be vented before or after transfer of the slurry.

In a preferred embodiment of the coupling the vent valve is adapted to be operated in conjunction with the main valve member. In this way the various steps of the slurry transfer procedure can be correctly sequenced.

When the valve means comprise a separate power supply their operation does not rely on the tractor providing power.

In a preferred embodiment of the inventive coupling the footplate and/or the valve means is/are adapted to be releasably connected to the mobile tank for transport. In this way the mobile tank may carry the coupling wherever it goes.

The invention will now be illustrated by way of an exemplary embodiment thereof, while reference will be made to the accompanying drawings, in which corresponding elements are identified by reference numerals that have been increased by "100", and in which:
Fig. 1 is a side view of a mobile slurry tank connected to a stationary slurry tank by a coupling of the general type to which the invention pertains,
Fig. 2 is a perspective view of the main elements of a prior art coupling as defined in EP 1 050 204,

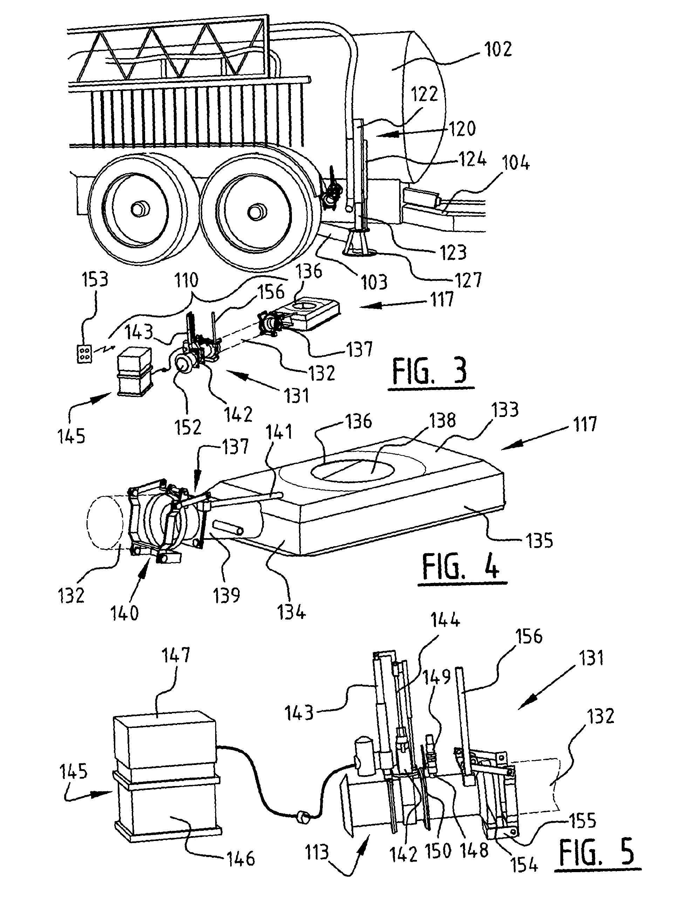

Fig. 3 is a perspective view of the front part of a mobile slurry tank and a coupling in accordance with the present invention,
Fig. 4 is an enlarged scale perspective view from a different angle showing the footplate of the coupling of fig. 3, and
Fig. 5 is an enlarged scale perspective view from yet another angle showing the valve means of the coupling of fig. 3.

A mobile slurry tank 102 includes a frame 104 for connecting to a tractor (not shown) and a fill line 103 for drawing in slurry supplied from a stationary storage tank (not shown) by a supply line (not shown either). As in the prior art system described above, the end of the fill line 103 is carried by a telescoping leg 120 having a fixed part 122 mounted on the frame 104 and a telescoping part 123 that is movable by a jack 124. A coupling flange 127 is arranged to be connected to the coupling 110 in accordance with the present invention.

The coupling 110 has a modular structure and includes a footplate 117 and separate valve means 131, which are interconnected by an intermediate conduit 132, in this embodiment a flexible hose (shown in phantom lines). The footplate 117 has a box-shaped body including a flat top 133 and sidewalls 134, 135. A coupling mouth 136 is formed in the flat top 133, while a connector 137 protrudes from one of the sidewalls 134. A sloping inner wall 138 in the box-shaped footplate 117 defines a plenum which is in fluid communication with a stub 139 of the connector 137. The connector 137 further includes a clamping mechanism 140 operable by a handle 141 for connecting one end of the intermediate conduit 132 to the footplate 117.

The valve module 131 comprises a tubular body 113 which defines an internal conduit 152. A main valve member is movably arranged in the body 113 for selectively closing off or opening the internal conduit 152. In the illustrated embodiment the valve member is a sliding valve that is slidably arranged in a valve housing 142. A piston-type actuator 143 is arranged on the body 113 of the valve module 131 and is connected to a piston 144 carrying the sliding valve member. The actuator 143 may be hydraulic or pneumatic and may include an electrically driven pump or compressor. Alternatively, the actuator could have a rack and pinion gearing driven by an electric motor.

Although power to the actuator 143 could be supplied by the tractor, in the illustrated embodiment of the invention the valve module has its own power supply 145. The power supply 145 may include a battery 146 and a transformer 147.

The valve module 131 further comprises a vent line 148 that extends through the wall of the tubular body 113 and that debouches in the surrounding atmosphere. This vent line 148 is closed off by a controllable vent valve 149, which is adapted to be operated in conjunction with the main valve member. To this end a lever 150 controlling the vent valve 149 is connected to a bridge piece 151 that is arranged on the piston 144 of the main valve member and that is operated by the actuator 143. The lever 150 is biased to the closed position of the vent valve 149 by a spring 121.

Actuation of the main valve member and the vent valve 150 is controlled by control means 153, which in the illustrated embodiment take the form of a remote control unit that may be operated from the tractor. The remote control unit may be wired or wireless.

And finally, the tubular body 113 includes a connector 154 for the intermediate conduit 132, which is again provided with a clamping mechanism 155 that may be operated by a handle 156.

In operation the various modules of the coupling 110, which may be carried on the mobile tank 102, are laid out on the ground and connected to each other by the intermediate conduit 132. The end of the valve module 131 opposite the intermediate conduit 132 is then connected to a supply line running to the stationary storage tank. Then the mobile tank 102 is positioned such that the end of the fill line 103 is vertically above the coupling mouth 136 of the footplate 117. In that position the telescoping leg 123 is lowered so as to place the coupling flange 127 on the coupling mouth 136, and then the valve closing off the fill line is opened, while the valve unit 131 is controlled to open the main valve and close the vent valve 150. Slurry may then be transferred from the storage tank into the mobile tank 102 by a vacuum system.

Due to the modular structure of the coupling 110 the entire operation may easily be performed by a single operator. Moreover, since the coupling is easily transportable, the mobile tank 102 may be coupled to storage tanks at various locations.

Although the invention has been described above in connection with an exemplary embodiment thereof, it should be appreciated that many variations and modifications of the invention are conceivable within the scope of the following claims.

## Claims

1. A coupling for connecting a fill line of a mobile tank with a supply line of a stationary storage tank, comprising a footplate carrying a coupling mouth and adapted for connection with the storage tank through the supply line and valve means for selectively establishing and interrupting fluid communication between the footplate and the storage tank, **characterized in that** the coupling has a modular structure.

2. The coupling of claim 1, **characterized in that** the footplate and the valve means are formed as separate modules that may be interconnected by an intermediate conduit.

3. The coupling of claim 2, **characterized in that** the conduit is a flexible hose.

4. The coupling of claim 2 or 3, **characterized in that** the footplate has an upper surface in which the coupling mouth is formed and a side face carrying a connector for the intermediate conduit.

5. The coupling of any of claims 2-4, **characterized in that** the valve means comprise a body defining an internal conduit, a main valve member movably arranged in the body for selectively closing off or opening the internal conduit, and a connector for the intermediate conduit.

6. The coupling of claim 5, **characterized in that** the valve means comprise an actuator operatively connected to the valve member and control means controllingly connected to the actuator.

7. The coupling of claim 6, **characterized in that** the control means are adapted for remote control.

8. The coupling of any of claims 5-7, **characterized in that** the valve means comprise a vent line extending through the body from the internal conduit to the atmosphere, as well as a controllable vent valve.

9. The coupling of claim 8, **characterized in that** the vent valve is adapted to be operated in conjunction with the main valve member.

10. The coupling of any of claims 5-9, **characterized in that** the valve means comprise a separate power supply.

11. The coupling of any of claims 2-10, **characterized in that** the footplate and/or the valve means is/are adapted to be releasably connected to the mobile tank for transport.
